# Europäisches Patentamt

# European Patent Office

# Office européen des brevets

(19)

(11) Numéro de publication: **0 179 720**
**B1**

(12) # FASCICULE DE BREVET EUROPÉEN

(45) Date de publication du fascicule du brevet:
04.10.89

(51) Int. Cl.⁴: **G 01 B 7/10, G 01 B 7/02**

(21) Numéro de dépôt: **85402064.1**

(22) Date de dépôt: **23.10.85**

(54) **Procédé et dispositif pour mesurer l'épaisseur de couches métalliques minces déposées sur un support conducteur.**

(30) Priorité: **24.10.84 FR 8416290**

(43) Date de publication de la demande:
**30.04.86 Bulletin 86/18**

(45) Mention de la délivrance du brevet:
**04.10.89 Bulletin 89/40**

(84) Etats contractants désignés:
**AT BE CH DE GB IT LI LU NL SE**

(56) Documents cité:
**EP-A-0 129 282**
**EP-A-0 136 238**
**FR-A-2 140 864**
**FR-A-2 507 310**
**FR-A-2 534 015**
**US-A-3 358 225**
**US-A-3 626 344**

(73) Titulaire: **STEIN HEURTEY, Z.A.I. du Bois de l'Epine BP No 69, F-91130 Ris Orangis (FR)**

(72) Inventeur: **Wang, Robert, 33 Avenue Eric Morlet, F-91320 Wissous (FR)**
Inventeur: **Clergeot, Henri, 4 Allée de Québec, F-91300 Massy (FR)**
Inventeur: **Monteil, François, 20 rue Louis Blériot, F-91000 Bondoufle (FR)**
Inventeur: **Placko, Dominique, 21 Allée de la Toison d'Or, F-94000 Creteil (FR)**

(74) Mandataire: **Armengaud Ainé, Alain, Cabinet ARMENGAUD AINE 3 Avenue Bugeaud, F-75116 Paris (FR)**

## Description

La présente invention concerne la fabrication de bandes métalliques revêtues par dépôt d'une couche mince d'un autre métal, présentant des propriétés particulières de résistance chimique, d'aspect physique, ou autres.

Le métal d'apport déposé en couche mince sur la bande métallique est le plus souvent d'un coût beaucoup plus élevé que le métal de la bande métallique support, et il est donc essentiel de contrôler avec précision, et en cours de fabrication, l'épaisseur déposée. Cette exigence apparaît plus particulièrement dans les installations de grande capacité, et notamment dans les installations qui fonctionnent en continu.

De nombreuses techniques ont été développées et appliquées pour réaliser des mesures d'épaisseur des couches métalliques minces déposées sur un support métallique.

La plupart de ces techniques utilisent l'absorption ou la diffraction d'un rayonnement ionisant (β ou rayons X) dans la couche mince déposée pour en déterminer l'épaisseur. D'autres techniques font appel à la déformation ou l'affaiblissement d'un champ magnétique par le métal d'apport sur un support magnétique.

Ces techniques connues donnent généralement satisfaction, mais elles présentent cependant des défauts, qui en limitent les conditions d'application. C'est ainsi que, notamment, elles exigent que les caractéristiques géométriques du support (planéité et position) soient définies avec précision et invariables. Par ailleurs, il est nécessaire de procéder à des étalonnages fréquents.

Dans le cas des techniques mettant en oeuvre des sources de rayonnement ionisant, le coût et la taille de celles-ci interdisent leur multiplication pour mesurer une distribution de l'épaisseur du revêtement. Pour pallier cette difficulté, on procède généralement à un déplacement mécanique de la source, ce qui entraîne une complexité et une fragilité accrue des installations, avec, en outre, dans le cas de supports en défilement, la présence de zones où la mesure ne peut pas être effectuée.

La présente invention se propose d'apporter un procédé permettant d'éviter les inconvénients mentionnés ci-dessus. Elle introduit un procédé de mesure de l'épaisseur d'une couche de dépôt métallique s'accommodant des variations de la position de l'objet contrôlé, ne nécessitant pas d'étalonnages fréquents, et d'un faible prix de revient, ce qui permet la mise en place et l'exploitation d'un grand nombre de points de mesure dans un espace restreint.

Le procédé de l'invention part de la constation suivante:

Lorsqu'une surface métallique conductrice est approchée d'un circuit magnétique excité par une tension alternative, les courants de Foucaulid empêchent la pénétration du champ magnétique alternatif dans la surface métallique conductrice. La présence de la surface métallique se traduit par une modification de la réluctance du circuit magnétique.

Cette modification de la réluctance dépend de la distance séparant le circuit magnétique de la surface métallique conductrice, et elle peut donc être utilisée pour déterminer la distance de la surface métallique. Cette application est décrite en particulier dans FR-A-2 507 310 et FR-A-2 524 332.

La variation de la réluctance, dans le cas de champ magnétique à haute fréquence, est pratiquement indépendante de la conductivité de la surface métallique. En revanche, cette propriété joue un rôle déterminant dans les pertes qui naissent par effet Joule entraîné par les courants de Foucault. Cette constatation a permis de réaliser (FR-A-2 140 864 et US-A-3 626 344) un système permettant de déterminer l'épaisseur de la couche métallique mince déposée sur un support conducteur, à partir de la mesure des pertes correspondant à l'effet Joule, dû aux courants de Foucault, qui apparaissent lorsqu'on approche un circuit magnétique, excité par une tension alternative, de la surface métallique.

Dans le cas d'un métal homogène, les pertes dues aux courants de Foucault augmentent avec la résistivité, selon la relation:

$$P = K\, H_T^2\, \sqrt{\omega\mu\varepsilon} \tag{1}$$

dans laquelle
$P$ : pertes par effet Joule,
$H_T^2$ : champ moyen à la surface métallique conductrice,
$\omega$ : pulsation d'excitation,
$\mu$ : perméabilité magnétique,
$\varepsilon$ : résistivité,
$K$ : constante.

Pour une couche métallique $\underline{d}$ d'épaisseur $\underline{e}$, ayant les caractéristiques $\mu_d$ et $\varepsilon_d$ déposée sur un substrat caractérisé par $\mu$ et $\varepsilon$, les pertes s'expriment par la relation:

$$P(e) = P\,\frac{(1+n)^2 e^{2E} - (1-n)^2 e^{-2E} - 2(1-n^2)\sin 2E}{(1+n)^2 e^{2E} + (1-n)^2 e^{-2E} + 2(1-n^2)\cos 2E}$$

$$E = \frac{e}{\delta}$$

$$n = \sqrt{\frac{\varepsilon\,\mu_d}{\varepsilon_d\,\mu}}$$

$$P = K\,H_T{}^2\,\sqrt{\omega\mu_d\varepsilon_d} \qquad\qquad (1)$$

$$S = \sqrt{\tfrac{2\varepsilon_d}{\omega\mu_d}}$$

La constante K, dans l'expression (1) donnant les pertes par effet Joule, est définie expérimentalement, pour un circuit magnétique donné à partir d'une série d'échantillons d'épaisseur connue.

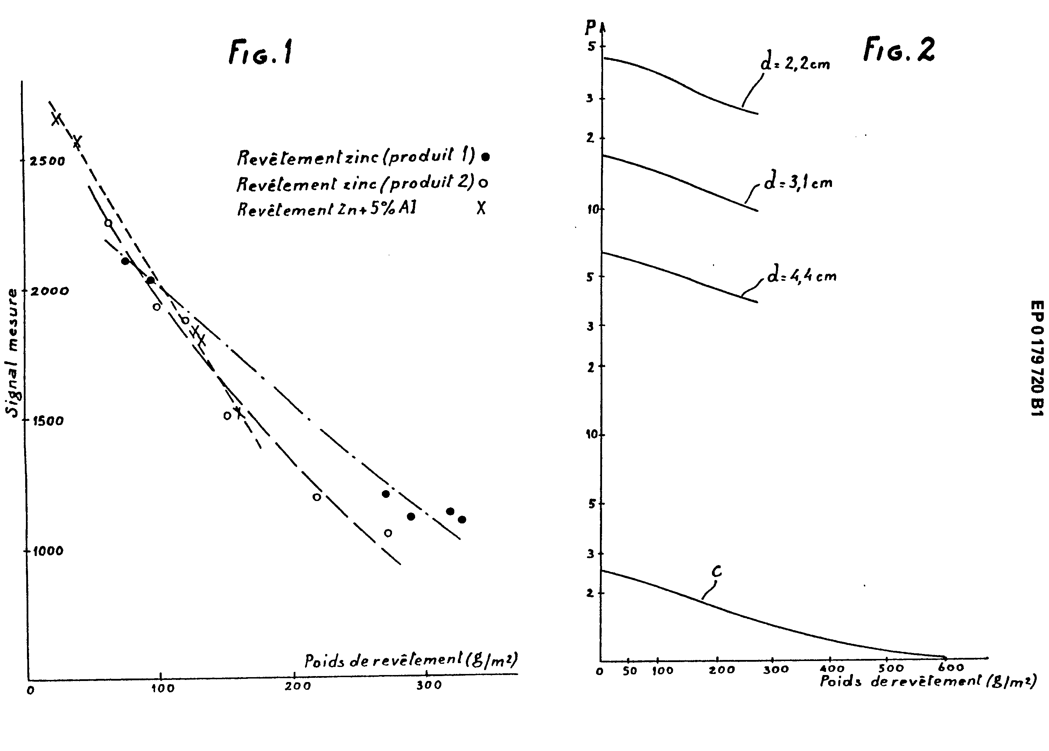

Sur la figure 1 des dessins annexés, on a donné quelques exemples non limitatifs de résultats de mesures effectuées sur des échantillons de tôles d'acier revêtues de zinc et d'alliage zinc-aluminium, d'épaisseur variable. On remarque que les courbes correspondantes ont une forme similaire, malgré la provenance différente et la conposition différente des échantillons.

Les courbes expérimentales ainsi obtenues ont été déterminées en maintenant une distance constante entre le système de détection et la surface métallique. Or, l'expérience a montré que, la variation de cette distance, tout en modifiant le signal mesuré, n'a aucune influence sur la forme de la courbe obtenue comme on peut le voir sur la figure 2, qui présente une comparaison des mesures des pertes P, à différentes distances, avec la courbe théorique normalisée C. Il en résulte qu'il est possible de mesurer l'épaisseur du revêtement métallique mince quelle que soit la position de la surface métallique par rapport au système détecteur contenant le circuit magnétique excité par une tension alternative.

En conséquence, cette invention concerne un procédé de mesure de l'épaisseur de couches métalliques minces déposées sur un support conducteur et de la distance de la surface métallique à partir des courants de Foucauld qui apparaissent lorsqu'une surface métallique conductrice est approchée d'un circuit magnétique excité par une tension alternative caractérisé en ce que:

- On crée un flux magnétique qui est partagé en un flux actif (Ø) et un flux de référence (Ø₀);

- On recueille le signal aux bornes d'un enroulement sensible à (Ø - Ø₀); et

- On mesure simultanément:
  la composante de ce signal en quadrature avec l'excitation, qui correspond aux pertes par effet Joule et qui donne l'information relative a l'épaisseur du revêtement mince et
- la composante de ce signal en phase avec l'excitation qui est proportionnelle à la réluctance et qui donne l'information concernant la distance de la surface métallique.

Selon la présente invention, la mesure de l'épaisseur du revêtement et de la distance de la surface métallique mettant en oeuvre le procédé décrit ci-dessus s'effectue à l'aide d'un capteur caractérisé en ce qu'il comporte:

- Une structure (10, 10') en forme de U. E ou H, placée a une certaine distance de la surface métallique et munie d'un enroulement d'excitation (12) créant ledit flux actif (O) et ledit flux de référence (O)
- un enroulement différentiel (14) sensible à (O - O) recueillant le signal comportant ladite composante en quadrature et ladite composante en phase et,
- un circuit électronique de traitement de signaux permettant de déterminer simultanément l'épaisseur du revêtement et la distance séparant ledit capteur de ladite surface métallique par la mesure, respectivement de ladite composante en quadrature et de la composante en phase.

Selon l'invention, on prévoit un blindage massif autour du circuit magnétique du capteur, en ne laissant subsister qu'un faible entrefer, afin de canaliser le flux et isoler le capteur des parasites.

D'autres caractéristiques et avantages de cette invention ressortiront de la description faite ci-après, en référence aux dessins annexés, qui en illustrent divers exemples de réalisation dépourvus de tout caractère limitatif. Sur les dessins:

- La Figure 1 représente quelques exemples des courbes donnant la mesure des pertes en fonction du poids du revêtement, pour des bandes de diverses provenances, ces courbes ayant été discutées ci-dessus;
- La Figure 2 représente des courbes identiques à la Figure 1, mais correspondant à différentes distances entre le détecteur et la surface métallique, ces courbes ayant été discutées ci-dessus;
- La Figure 3 est une vue schématique, en perspective, représentant un mode de réalisation préféré d'un capteur selon cette invention;
- La Figure 4 illustre une variante d'un capteur selon l'invention;
- La Figure 5 est une vue éclatée d'un capteur selon l'invention, avec son blindage;
- La Figure 6 est une vue schématique montrant la disposition des capteurs selon l'invention à la sortie d'un bain de galvanisation;
- La Figure 7 illustre un exemple de réalisation d'un circuit électronique de traitement des signaux émis par un capteur selon l'invention, en vue de déterminer l'épaisseur du revêtement mince, à distance fixe;
- La Figure 8 représente les réseaux de courbes des réluctances et pertes, à épaisseur constante et à distance constante; et,
- La Figure 9 illustre un exemple de réalisation d'un circuit électronique de traitement des signaux émis par un capteur selon l'invention, en vue de déterminer simultanément l'épaisseur du revêtement mince et sa distance par rapport au capteur.

3

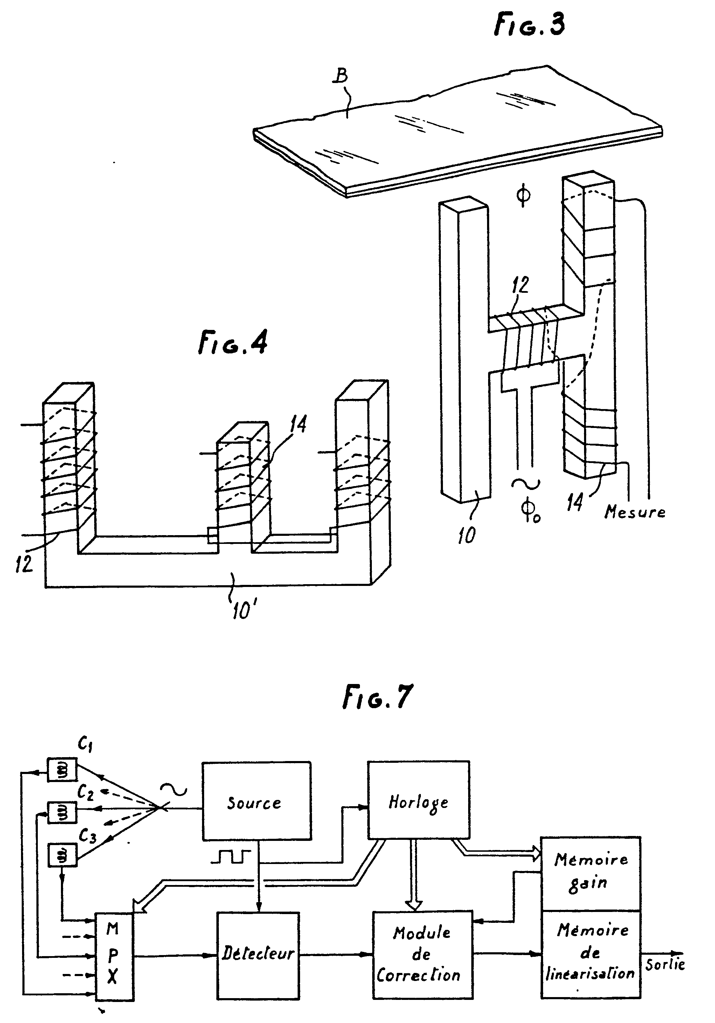

En se référant aux Figures 3 et 4, on voit que le capteur selon l'invention présente de préférence la forme d'un H (Fig. 3) ou d'un E (Fig. 4). Ce capteur 10 est placé à une certaine distance de la bande B, et il comporte un circuit magnétique excité par une tension alternative, qui comprend un enroulement commun 12, créant un flux de mesure $\emptyset$ et un flux de référence $\emptyset_0$. Le signal est recueilli aux bornes de l'enroulement différentiel 14, sensible à $\emptyset - \emptyset_0$. Pour ce capteur, la composante du signal en quadrature avec l'excitation correspond aux pertes P par effet Joule, dont la mesure permet de déterminer l'épaisseur du revêtement mince déposé sur la bande 8, et la composante du signal en phase correspond à la réluctance, dont la mesure peut être utilisée pour déterminer, comme connu, la distance séparant le capteur de la surface métallique de la bande B.

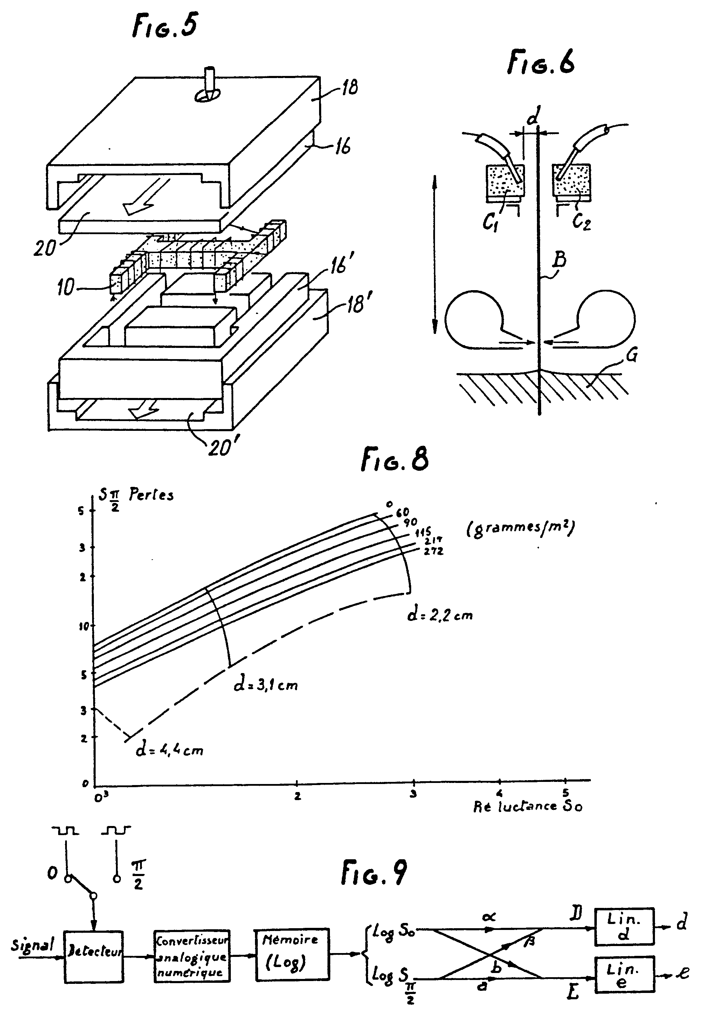

La Figure 5 représente de façon plus détaillée le capteur selon l'invention avec sa structure 10 en H, en ferrite, munie de ses enroulements, placée dans une structure massive 16, 16', par exemple en "Dural", formant blindage, pour canaliser le flux et isoler le capteur des parasites. Deux coquilles 18, 18', par exemple en céramique, assurent l'isolement thermique, un vide 20, 20' étant ménagé pour permettre la circulation de l'air de refroidissement.

Sur la représentation schématique de la Figure 6, on a montré comment pouvaient être placés deux capteurs $C_1$ et $C_2$ selon l'invention, de chaque côté d'une bande B sortant d'un bain de galvanisation. Il ne s'agit là, bien entendu, que d'un exemple d'application non limitatif.

La Figure 7 illustre un exemple de réalisation d'un circuit électronique assurant le traitement des signaux émis par le capteur et correspondant aux pertes par effet Joule, pour déterminer l'épaisseur du revêtement mince déposé sur la bande B (la distance de cette dernière par rapport au capteur étant fixe).

Le signal d'excitation des capteurs est délivré sous basse impédance par un oscillateur, suivi d'un amplificateur de puissance. L'amplitude est stabilisée, et la phase est asservie par une horloge de référence qui fournit les signaux carrés nécessaires pour la détection synchrone.

Sur le schéma de la Figure 7, on voit donc que le circuit électronique de traitement comprend une source de puissance délivrant le signal d'excitation des capteurs $C_1$, $C_2$, $C_3$, un module de multiplexage opérant sur les signaux des capteurs, et qui comprend, en sortie, un amplificateur adaptateur d'impédance, un détecteur synchrone; un module de filtrage et de correction des gains et de conversion analogiquenumérique; et une mémoire de linéarisation. A la sortie, on dispose d'un signal numérique qui est proportionnel à l'épaisseur à mesurer.

Ce circuit de traitement ne permet que des mesures d'épaisseurs de revêtements minces, à distance fixe. Pour réaliser simultanément des mesures de distance et d'épaisseur, il faut en général deux voies de détection, à 0° et $\frac{\pi}{2}$ pour mesurer les pertes et la réluctance. L'utilisation de deux voies de détection peut être également utile, en mesure de distance, si l'on veut corriger l'indication du capteur en fonction de la pénétration du champ magnétique dans le métal. Elle peut également servir, en mesure d'épaisseur, à corriger l'influence de la distance, si le positionnement précis à distance fixe du capteur n'est pas possible.

Dans le cas général, la distance et l'épaisseur pourront être recalculées après étalonnage par un algorithme à deux variables à partir des mesures de pertes et de réluctance $S\frac{\pi}{2}$ et $S_0$.

Cependant, les résultats de mesure (Figure 8) montrent que les courbes de réluctance et pertes, à épaisseur constante et à distance constante, constituent sensiblement des réseaux de droites parallèles en échelles logarithmiques, ceci étant dû, en théorie, au fait que la réluctance varie proportionnellement à $H_T$ et les pertes proportionnellement à $H_T^2$. On peut donc former deux combinaisons linéaires:

$$D = \text{Log } S_0 + \text{Log } S\tfrac{\pi}{2}$$

$$E = \text{Log } S_0 + b \text{ Log } S\tfrac{\pi}{2},$$

qui sont fonctions, respectivement, de la distance seule ou de l'épaisseur seule. La distance et l'épaisseur peuvent alors être restituées, à partir de D et de E, par une simple linéarisation à une variable.

On remarquera qu'on peut utiliser une seule voie de détection, la phase de commande du détecteur étant commutée de 0 à $\frac{\pi}{2}$. La mémoire de linéarisation peut être utilisée pour effectuer la transformation logarithmique de $S_0$ et $S\frac{\pi}{2}$. La Figure 9 représente schématiquement un circuit de traitement du signal du capteur de l'invention, selon ce mode de fonctionnement.

**Revendications**

1. Procédé de mesure de l'épaisseur de couches métalliques minces déposées sur un support conducteur et de la distance de la surface métallique à partir des courants de Foucauld qui apparaissent lorsqu'une surface métallique conductrice est approchée d'un circuit magnétique excité par une tension alternative caractérisé en ce que:
   - On crée un flux magnétique qui est partagé en un flux actif ($\emptyset$) et un flux de référence ($\emptyset_0$);
   - On recueille le signal aux bornes d'un enroulement sensible a ($\emptyset - \emptyset_0$); et
   - On mesure simultanément:
   - la composante de ce signal en quadrature avec l'excitation, qui correspond aux pertes par effet Joule et qui

EP 0 179 720 B1

donne l'information relative à l'épaisseur du revêtement mince et
- la composante de ce signal en phase avec l'excitation qui est proportionnelle à la réluctance et qui donne l'information concernant la distance de la surface métallique.

2. Capteur pour la mise en oeuvre du procédé selon la revendication 1, caractérisé en ce qu'il comporte:
- Une structure (10, 10') en forme de U, E ou H, placée à une certaine distance de la surface métallique et munie d'un enroulement d'excitation (12) créant ledit flux actif ($\emptyset$) et ledit flux de référence ($\emptyset_0$)
- Un enroulement différentiel (14) sensible à ($\emptyset - \emptyset_0$) recueillant le signal comportant ladite composante en quadrature et ladite composante en phase et,
- Un circuit électronique de traitement de signaux permettant de déterminer simultanément l'épaisseur du revêtement et la distance séparant ledit capteur de ladite surface métallique par la mesure, respectivement de ladite composante en quadrature et de la composante en phase.

3. Capteur selon la revendication 2, caractérisé en ce qu'on prévoit un blindage massif (16 - 16') autour du circuit magnétique, en ne laissant subsister qu'un faible entrefer, afin de canaliser le flux et d'isoler le capteur des parasites.

4. Capteur selon l'une des revendications 2 ou 3, caractérisé en ce qu'il est associé à un circuit électronique de traitement des signaux qui comprend une source de puissance, délivrant sous basse impédance le signal d'excitation du capteur; un module de multiplexage opérant sur les signaux du capteur et qui comprend, en sortie, un amplificateur adaptateur d'impédance une horloge de référence, stabilisant l'amplitude, asservissant la phase et fournissant les signaux carrés nécessaires à la détection synchrone; un module de filtrage et de correction des gains et de conversion analogique-numérique et une mémoire de linéarisation délivrant, en sortie, un signal numérique proportionnel à l'épaisseur à mesurer.

5. Capteur selon l'un des revendications 2 ou 3, caractérisé en ce qu'il est associé à un circuit électronique de traitement de signaux permettant de déterminer simultanément la distance du capteur à la surface métallique et l'épaisseur dudit revêtement mince, le circuit comportant deux voies de détection, à 0° et à $\pi/2$, pour mesurer les pertes par effet Joule et la réluctance, la distance et l'épaisseur étant recalculées après étalonnage par un algorithme à deux variables à partir des mesures de pertes et de réluctance.

6. Capteur selon l'une des revendications 2 ou 3, caractérisé en ce qu'il est associé à un circuit électronique de traitement de signaux permettant de déterminer simultanément la distance du capteur à la surface métallique et l'épaisseur du revêtement mince sur cette dernière, le circuit comportant une seule voie de détection, la phase de commande du détecteur étant commutée de 0 à $\pi/2$.

**Patentansprüche**

1. Verfahren zur Dickenmessung von dünnen, auf einem leitenden Träger aufgebrachten metallischen Schichten und zur Messung des Abstandes von der metallischen Oberfläche mit Hilfe von Foucauld-Strömen, die auftreten, wenn eine leitende metallische Oberfläche einem Magnetkreis angenähert wird, der durch eine Wechselspannung erregt wird,
dadurch gekennzeichnet,
daß man einen magnetischen Fluß erzeugt, der in einen aktiven Fluß ($\emptyset$) und einen Referenzfluß ($\emptyset_0$) aufgeteilt ist;
- daß man das Signal an den Klemmen einer Wicklung, die für ($\emptyset - \emptyset_0$) empfindlich ist, abgreift; und
- daß man gleichzeitig
- den Anteil dieses Signals, der gegenüber der Erregung um 90° phasenverschoben ist, den Stromwärmeverlusten entspricht und die Information über die Dicke der dünnen Beschichtung liefert, und
- den Anteil dieses Signals mißt, der mit der Erregung in Phase und proportional zum Widerstand ist und die Information bezüglich des Abstandes von der metallischen Oberfläche liefert.

2. Meßaufnehmer zur Durchführung des Verfahrens nach Anspruch 1
gekennzeichnet durch
- eine Struktur (10, 10') in Form eines U, E oder H, die in einer bestimmten Entfernung von der metallischen Oberfläche angeordnet und mit einer Erregerwicklung (12) die den aktiven Fluß ($\emptyset$) und den Referenzfluß ($\emptyset_0$) erzeugt, versehen ist,
-eine differenzielle Wicklung (14) die für ($\emptyset - \emptyset_0$) empfindlich ist, und das Signal, das den 90° phasenverschobenen und den In-Phase-Anteil umfaßt, aufnimmt und
- einen elektronischen Schaltkreis zur Verarbeitung der Signale, der es gestattet, gleichzeitig die Dicke der Beschichtung und den Abstand, der den Meßaufnehmer von der metallischen Oberfläche trennt, durch die Messung des 90° phasenverschobenen bzw. des In-Phase-Anteils zu bestimmen.

3. Meßaufnehmer nach Anspruch 2,
dadurch gekennzeichnet,
daß eine massive Abschirmung (16 - 16') um den Magnetkreis vorgesehen ist, die nur noch einen kleinen Luftspalt beläßt, um den magnetischen Fluß zu kanalisieren und den Meßaufnehmer von Störsignalen abzuschirmen.

4. Meßaufnehmer nach einem der Ansprüche 2 oder 3,
dadurch gekennzeichnet,

5

daß elektronischer Schaltkreis zur Verarbeitung der Signale angeschlossen ist, der folgende Komponenten umfaßt: Eine Stromversorgung, die ein niederohmiges Erregersignal für den Meßaufnehmer liefert; ein Multiplexamodul, das die Signale des Maßaufnehmers aufbereitet und ausgangseitig einen Verstärker mit Anpassungstransformator aufweist; eine Referenzzeituhr, die die Amplitude stabilisiert, die Phase reguliert und die nötigen Rechtecksignale zur Gleichrichtung liefert; ein Modul zur Filterung und Korrigierung der Verstärkung und zur analog-Digitalwandlung, und schließlich ein linearisierender Speicher, der ausgangsseitig ein numerisches Signal proportional zur zu messenden Dicke liefert.

5. Meßaufnehmer nach einem der Ansprüche 2 oder 3,
dadurch <u>gekennzeichnet</u>,
daß ein elektronischer Schaltkreis zur Verarbeitung der Signale angeschlossen ist, der es gestattet, gleichzeitig die Entfernung des Meßaufnehmers von der metallischen Oberfläche und die Dicke der besagten dünnen Beschichtung zu bestimmen, wobei der Schaltkreis zwei Wege der Erfassung aufweist, bei 0° und bei $\pi/2$, um die Stromwärmeverluste und Verluste durch den magnetischen Widerstand zu messen, so daß die Entfernung und die Dicke, nach entsprechender Eichung, durch einen Algorhythmus mit zwei Variablen durch die Messung der Verluste und des magnetischen Widerstandes bestimmt werden können.

6. Meßaufnehmer nach einem der Ansprüche 2 oder 3,
dadurch <u>gekennzeichnet</u>,
daß ein elektronischer Schaltkreis zur Verarbeitung der Signale angeschlossen ist, der es gestattet, gleichzeitig die Entfernung des Meßaufnehmers von der metallischen Oberfläche und die Dicke der dünnen Beschichtung auf letzterer zu bestimmen, wobei der Schaltkreis einen einzigen Erfassungsweg aufweist und die Phase der Regelung der Erfassung von 0 auf $\pi/2$ verändert werden kann.

## Claims

1. Process for measuring the thickness of thin metal films deposited on a conductive support and the distance from the metal surface on the basis of eddy currents appearing when a conductive metal surface is approached by a magnetic circuit excited by an alternating voltage, characterized in that a magnetic flux is produced, which is subdivided into an active flux ($\emptyset$) and a reference flux ($\emptyset_0$), the signal is collected at the terminals of a winding sensitive to ($\emptyset$ - $\emptyset_0$) and simultaneous measurement takes place of the component of this signal in quadrature with the excitation, which corresponds to the Joule effect losses and which gives information relative to the thickness of the thin film and the component of said signal in phase with the excitation, which is proportional to the reluctance and which gives the information relating to the distance from the metal surface.

2. Transducer for performing the process according to claim 1, characterized in that it comprises a U, E or H-shaped structure (10, 10') placed at a certain distance from the metal surface and provided with an exciting winding (12), which produces said active flux and said reference flux ($\emptyset_0$), a differential winding (14) sensitive to ($\emptyset$ - $\emptyset_0$) collecting the signal incorporating said component in quadrature and said component in phase and an electronic signal processing circuit making it possible to simultaneously determine the thickness of the coating and the distance separating said transducer from the metal surface by respectively measuring said quadrature component and said phase component.

3. Transducer according to claim 2, characterized in that a solid shield (16, 16') is provided around the magnetic circuit, whilst only leaving a small air gap, so as to channel the flux and isolate the transducer from interference.

4. Transducer according to one of the claims 2 or 3, characterized in that it is associated with an electronic signal processing circuit comprising a power source supplying under low impedance the exciting signal of the transducer, a multiplexing module operating on the signals of the transducer and which comprises, at the output, an impedance matching amplifier, a reference clock, which stabilizes the amplitude, controlling the phase and supplying the square signals necessary for synchronous detection, a module for filtering and correcting gains and analog-digital conversion and a linearization memory supplying, at the output, a digital signal proportional to the thickness to be measured.

5. Transducer according to one of the claims 2 or 3, characterized in that it is associated with an electronic signal processing circuit making it possible to simultaneously determine the distance from the transducer to the metal surface and the thickness of the said thin film, the circuit having two detection channels, at 0° and $\pi/2$, for measuring the Joule effect losses and the reluctance, the distance and thickness being recalculated after calibration by an algorithm with two variables on the basis of the loss and reluctance measurements.

6. Transducer according to one of the claims 2 or 3, characterized in that it is associated with an electronic signal processing circuit baking it possible to simultaneously determine the distance from the transducer to the metal surface and the thickness of the thin film on the latter, the circuit having a single detection channel, the control phase of the detector being controlled from 0 to $\pi/2$.

FIG.1

Revêtement zinc (produit 1) ●
Revêtement zinc (produit 2) o
Revêtement Zn+5% Al          X

Signal mesure

Poids de revêtement (g/m²)

FIG.2

d = 2,2 cm

d = 3,1 cm

d = 4,4 cm

C

Poids de revêtement (g/m²)

EP 0 179 720 B1

FIG. 3

FIG. 4

FIG. 7

FIG.5

FIG.6

FIG.8

FIG.9